Europäisches Patentamt

(19) European Patent Office

Office européen des brevets

(11) Numéro de publication: **0 236 249**
A1

# (12) DEMANDE DE BREVET EUROPEEN

(21) Numéro de dépôt: **87430004.9**

(22) Date de dépôt: **30.01.87**

(51) Int. Cl.⁴: **B 01 D 39/20**, C 04 B 35/18, C 04 B 38/06

(30) Priorité: **31.01.86 FR 8601470**

(43) Date de publication de la demande: **09.09.87**
**Bulletin 87/37**

(84) Etats contractants désignés: **AT BE CH DE ES GB IT LI NL SE**

(71) Demandeur: **CENTRE MERIDIONAL D'OENOLOGIE Société Anonyme dite:, Zone Industrielle, F-34800 Clermont l'Herault (FR)**

(72) Inventeur: **Alari, Jean-André, 13, rue Hoche Quartier Provençal, F-13120 Gardanne (FR)**
Inventeur: **Larbot, André, 940, rue du Ravin d'Embarre, F-34980 Saint Clément La Rivière (FR)**
Inventeur: **Guizard, Christian, Rue des Remparts Puechabon, F-34150 Gignac (FR)**
Inventeur: **Berthollet, Eric, 19, rue Monge, F-34100 Montpellier (FR)**
Inventeur: **Cot, Louis, Résidence Les Pins Villa No.3 Clapiers, F-34170 Castelnau Le Lez (FR)**
Inventeur: **Gugliermotte, Francis, Mas de la Tuillière Saint Jean de Cornie, F-34160 Castries (FR)**

(74) Mandataire: **Azais, Henri et al, c/o CABINET BEAU DE LOMENIE 14, rue Raphael, F-13008 Marseille (FR)**

(54) **Pièces poreuses en céramique frittée et procédé de fabrication.**

(57) L'invention a pour objet des pièces poreuses en céramique frittée et des procédés de fabrication de celles-ci.

Les pièces poreuses en céramique frittée selon l'invention ont, après cuisson, une composition minérale qui est comprise dans l'un des domaines P1 et P2 du diagramme de phase des silico-aluminates magnésiens et appartiennent à la famille minéralogique des mullites.

Une application des pièces selon l'invention est la fabrication de cartouches de filtration (microfiltration, ultrafiltration ou osmose inverse).

EP 0 236 249 A1

ACTORUM AG

La présente invention a pour objet des pièces poreuses en céramique frittée et des procédés de fabrication de celles-ci.

Le secteur technique de l'invention est celui de la fabrication des cartouches de filtration (microfiltration, ultrafiltration ou osmose inverse).

Les applications des cartouches de filtration tangentielle sont de plus en plus nombreuses et on citera à titre d'exemple la purification bactériologique de l'eau, le dessalement de l'eau, la préparation des jus de fruits etc.... Actuellement, on utilise le plus souvent comme élément de filtration, des pièces frittées en alumine, en graphite ou en carbure de silicium.

On connaît par ailleurs des céramiques composées de silico-aluminates de magnésium qui sont utilisées à l'état vitrifié pour leurs propriétés réfractaires ou isolantes et pour leur bon aspect de surface pour fabriquer notamment des appareils sanitaires ou des isolants électriques.

Des céramiques frittées poreuses à base de silico-aluminates de magnésium sont également utilisées comme support de catalyseurs par exemple pour fabriquer des pots d'échappement catalytiques.

Des céramiques frittées poreuses à base de silico-aluminates de magnésium ayant une composition qui appartient à la famille des cordiérites sont également connues comme éléments de filtration.

La publication du brevet FR. A. 2.249.850 (74/36.671) CORNING GLASS WORKS décrit des céramiques frittées poreuses comportant au moins 70% de cordiérite et un ou plusieurs autres composants minéraux pris dans le groupe constitué par la pyrophyllite, la cyanite, le quartz ou la silice fondue.

La publication du brevet FR. A. 2.302.976 (76/05.834) CORNING GLASS WORKS décrit des verres et des vitrocéramiques ayant une composition minérale située dans le domaine des cordiérites ($2Mgo$, $2Al_2O_3$, $5SiO_2$).

Le brevet U.S. A. 4.446.024 (DU PONT DE NEMOURS) décrit des structures poreuses utilisables en ultrafiltration qui sont composées d'un réseau de filaments creux entrecroisés, chaque filament étant obtenu en enrobant un fil combustible dans une pâte frittable ayant un point de fusion d'au moins 1400°C.

Le brevet U.S. A. 4.251.377 (DU PONT DE NEMOURS) décrit des dispositifs d'ultrafiltration qui sont composés d'un réseau de filament creux et poreux entrecroisés suivant trois dimensions. Chaque filament est obtenu en enrobant un fil combustible dans une pâte contenant une proportion de cordiérite comprise entre 5% et 50% du poids total et une proportion d'alumine alpha comprise entre 50% et 95% du poids total.

Les céramiques frittées poreuses connues à base de silico aluminates de magnésium appartiennent généralement à la famille des cordiérites et ont une température de fusion supérieure à 1340°C.

L'objectif de la présente invention est de fabriquer des pièces poreuses en céramique frittée pouvant être utilisées soit directement comme cartouches de filtration, soit comme support poreux d'un film micro-poreux dont les pores déterminent les caractéristiques de la filtration ou comme support d'une membrane d'osmose inverse.

A cet effet, un objectif de la présente invention est de procurer des céramiques frittées pouvant avoir une porosité réelle c'est-à-dire un rapport entre le volume des passages de fluide et le volume total compris entre 20% et 60% selon les températures de frittage et les agents organiques combustibles incorporés à la pâte avant la cuisson et des supports en céramique poreuse pouvant avoir un diamètre moyen de pores compris entre 0,5 micromètre et 6 micromètres, de sorte que l'on puisse déposer facilement sur ces supports un film microporeux ou une membrane d'osmose inverse.

On sait que lorsque le volume poreux d'une céramique frittée augmente sa résistance mécanique diminue.

Un objectif de l'invention est de procurer des cartouches filtrantes ou des supports qui allient une bonne porosité à une résistance mécanique suffisante.

Les objectifs de l'invention sont atteints au moyen de pièces poreuses en céramique frittée à base de silico-aluminates de magnésium qui ont après cuisson une compositon minérale comprise dans les limites suivantes :

- Silice ($SiO_2$) entre 30% et 60% du poids total;
- Alumine ($Al_2O_3$) entre 30% et 70% du poids total;

- Magnésie (MgO) entre 1% et 10% du poids total;

- Oxyde ferrique ($Fe_2O_3$) entre 0 et 2% du poids total;

- Oxyde de titane ($TiO_2$) entre 0 et 2% du poids total;

- Oxyde de sodium ($Na_2O$) entre 0 et 1% du poids total;

- Oxyde de potassium ($K_2O$) entre 0 et 1% du poids total;

- Oxyde de calcium (CaO) entre 0 et 2% du poids total;

- Oxyde de baryum (BaO) entre 0 et 2% du poids total,

de sorte qu'elles appartiennent à la famille des mullites et ont un point de fusion compris entre 1000°C et 1340°C.

Selon un premier mode de réalisation préférentiel, une première famille de pièces poreuses en céramique frittée selon l'invention ont, après cuisson, une composition minérale comprise dans les limites ci-après :

- Silice entre 50% et 60% du poids total;

- Alumine entre 30% et 40% du poids total;

- Magnésie entre 5% et 10% du poids total;

- Oxyde ferrique entre 1% et 2% du poids total;

- Oxyde de titane entre 0,5% et 2% du poids total;

- Oxyde de sodium entre 0,1 % et 0,5% du poids total;

- Oxyde de potassium entre 0,1% et 0,5% du poids total.

Selon un deuxième mode de réalisation préférentiel, une deuxième famille de pièces poreuses en céramique frittée selon l'invention ont, après cuisson, une composition minérale comprise dans les limites suivantes :

- Silice entre 30% et 40% du poids total;

- Alumine entre 60% et 70% du poids total;

- Magnésie entre 1% et 2% du poids total;

- Oxyde de calcium entre 0,5% et 2% du poids total;

- Oxyde de baryum entre 0,1% et 0,5%

L'invention a pour résultat de nouvelles pièces poreuses en céramique frittée qui peuvent être utilisées comme cartouches filtrantes ou comme support d'un film microporeux ou d'une membrane d'osmose inverse.

Grâce à leur composition, les pièces selon l'invention peuvent être frittées à une température relativement basse comprise entre 1000°C et 1340°C d'où une économie d'énergie dans la fabrication de ces pièces. De plus, il est possible de faire varier le volume poreux des pièces selon l'invention entre 20% et 60% donc à l'intérieur d'une plage de porosité très étendue. Le diamètre moyen des pores des céramiques selon l'invention peut varier entre 0,5 micromètre et 6 micromètres.

La description suivante se réfère à des exemples de procédés de fabrication de céramiquesporeuses selon l'invention, lesquels exemples n'ont aucun caractère limitatif.

La figure unique représente un diagramme bien connu définissant les limites des domaines d'équilibre de phases de mélanges ternaires de silice ($SiO_2$), d'alumine ($Al_2O_3$) et de magnésie ($MgO$).

Chaque domaine compris à l'intérieur du triangle et délimité par des lignes correspond à des compositions qui donnent naissance lorsqu'elles cristallisent à un silico-aluminate de magnésium qui appartient à une famille de minéraux déterminée.

Les céramiques industrielles qui sont utilisées comme produits réfractaires, comme isolants électriques,pour la fabrication d'appareils sanitaires ou comme céramiques poreuses appartiennent généralement au domaine des cordiérites dont la température de fusion est supérieure à 1340°C.

Les pièces en céramique selonl'invention ont après cuisson, une composition qui les classe dans la famille des mullites qui sont des silico-aluminates relativement pauvres en magnésium.

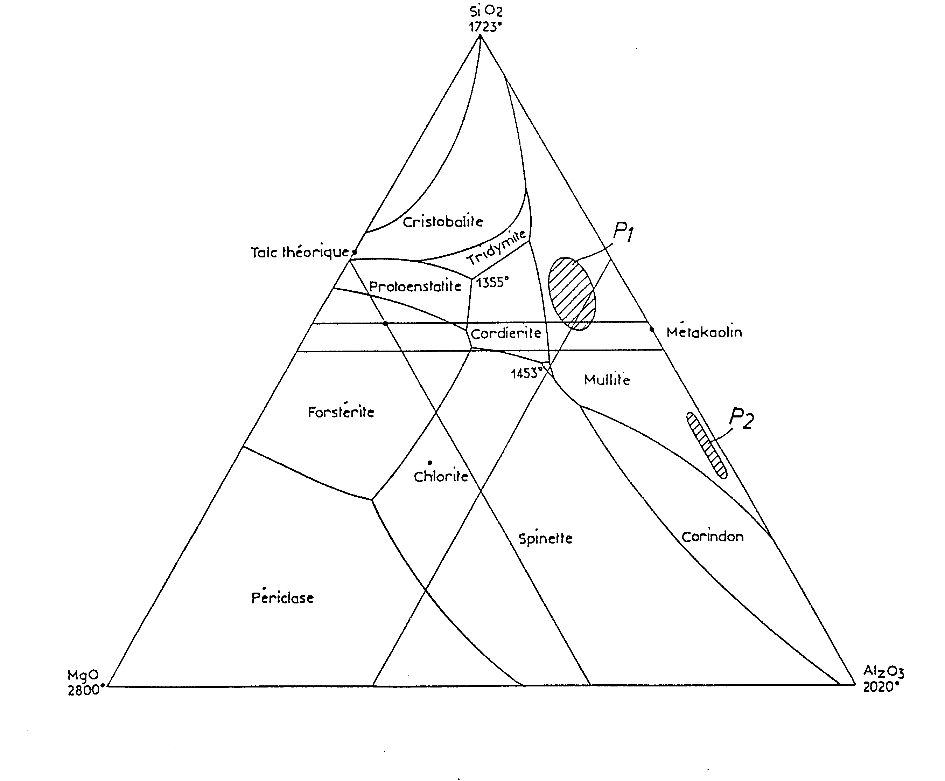

On décrit plus particulièrement, ci-après, des procédés de fabrication de deux familles de céramiques qui se situent dans les deux plages P1 et P2 qui sont hachurées sur la figure 1.

Plus généralement, les céramiques selon l'invention ont après cuisson, une composition minérale qui est comprise dans les limites suivantes :

- Silice ($SiO_2$) entre 30% et 60% du poids total;
- Alumine ($Al_2O_3$) entre 30% et 70% du poids total;
- Magnésie ($MgO$) entre 1% et 10% du poids total;
- Oxyde ferrique ($Fe_2O_3$) entre 0 et 2% du poids total;
- Oxyde de titane ($TiO_2$) entre 0 et 2% du poids total;
- Oxyde de sodium ($NaO$) entre 0 et 1% du poids total;
- Oxyde de potassium ($K_2O$) entre 0 et 1% du poids total;
- Oxyde de calcium ($CaO$) entre 0 et 2% du poids total;
- Oxyde de baryum ($BaO$) entre 0 et 2% du poids total.

Les différentes étapes de fabrication des pièces poreuses en céramique frittée sont les suivantes :

- mise au point de la composition chimique de la pâte et préparation de celle-ci;

- mise en forme des pièces par moulage ou extrusion de la pâte;

- séchage des pièces;

- cuisson des pièces pour obtenir le frittage;

- éventuellement dépôt d'une mince couche poreuse à la surface des pièces et recuisson de l'ensemble.

Trois groupes de produits ayant chacun une action spécifique entrent dans la composition chimique des pâtes :

a) des matières premières minérales contenant de la silice, de l'alumine et de l'oxyde de magnésium;

b) des oxydes de métaux alcalins ou alcalino-terreux agissant comme agents de frittage;

c) des produits organiques agissant comme liants de la pâte lesquels produits sont éliminés pendant la cuisson et font place à des vides qui contribuent à la porosité.

La pâte mise en oeuvre doit avoir des caractéristiques propres à assurer une bonne mise en forme des pièces, de telle sorte que leur aspect macroscopique et leur structure microscopique soient exempts de défauts. Les paramètres à contrôler sont le temps de mélange et de malaxage des produits et le taux d'humidification qui doit rester dans des limites relativement étroites.

La pâte doit présenter de bonnes caractéristiques de tenue, d'homogénéité, de plasticité et de reproductibilité.

Après un temps de vieillissement de la pâte, on procède à la mise en forme des pièces généralement par extrusion de la pâte crue à travers une filière.

Les pièces crues sont ensuite séchées sous atmosphère contrôlée ou non puis cuites.

Le programme de cuisson tient compte de la nature des produits organiques combustibles incorporés à la pâte.

L'élimination des produits organiques doit être réalisée en évitant toute carbonisation de ces produits et tout autre effet nocif sur la structure. Des études en microscopie électronique à balayage, des mesures de porosité et des tests de résistance mécanique sont nécessaires pour déterminer le meilleur programme de cuisson.

0236249

La durée et la température de la cuisson déterminent le frittage et par la même la porosité et la résistance mécanique, entre lesquelles il faut trouver un compromis qui dépend de l'utilisation envisagée.

La composition de la pâte crue est un facteur déterminant de la température de frittage et de la durée de cuisson et les compositions selon l'invention permettent d'obtenir des températures de frittage relativement basses et des pièces frittées dont la porosité et la résistance mécanique peuvent varier dans une plage suffisamment large pour satisfaire aux exigences d'un grand nombre d'applications.

En dehors des qualités de porosité et de résistance mécanique, les pièces poreuses en céramique frittée doivent avoir des propriétés de résistance à la corrosion et à l'abrasion et présenter un état de surface permettant le dépôt d'un film microporeux ou d'une membrane. La résistance à la corrosion doit répondre aux exigences de nettoyage en milieu acide ou basique ou en milieu oxydant.

La possibilité de dépôt d'un film microporeux est fonction de la composition minéralogique de la céramique et de l'état de surface de celle-ci.

Dans le cas où la pièce en céramique poreuse est utilisée comme élément filtrant, sans dépôt d'un film microporeux à sa surface, la distribution des diamètres des pores doit être la plus homogène possible.

Dans le cas où un film microporeux est déposé à la surface de la pièce en céramique poreuse, les valeurs des diamètres des pores au voisinage de la surface de la pièce recevant le film microporeux doivent se situer entre des limites déterminées. En effet, des pores ayant des diamètres trop importants rendent difficile le dépôt d'un film microporeux. Si, au contraire, les diamètres des pores sont trop faibles, le fluide ayant traversé le film microporeux s'écoule mal à travers la céramique.

Dans le cas où les pièces en céramique sont des cartouches de filtration tangentielle, une légère rugosité de la surface favorise une bonne perméabilité.

Les procédés et les compositions minérales selon l'invention permettent d'obtenir des pièces poreuses en céramique frittée qui répondent parfaitement aux exigences énoncées ci-dessus.

<u>EXEMPLE NO.1</u>

On mélange soigneusement les constituants suivants :

a) de la poudre de chamotte broyée ayant une granulométrie comprise entre 0 et 120 micromètres en proportions comprises entre 74,5% et 96% du poids total de poudre.

Les chamottes sont des silico-aluminates obtenus par calcination entre 1000° et 1400°C d'un mélange d'argile kaolonique, de talc et de carbonate de magnésium.

De tels produits sont vendus dans le commerce sous la dénomination de cordiérites synthétiques. A titre d'exemple, le produit utilisé peut être celui qui est vendu dans le commerce sous la marque "ARTAL 23" et qui est utilisé pour fabriquer des substrats en céramique poreuse destinés à immobiliser des micro-organismes.

b) un agent organique de porosité qui est, par exemple, de l'amidon en proportions comprises entre 0 et 12% du poids total de poudre.

c) un liant plastifiant par exemple un dérivé de l'amidon vendu sous la marque "AMIGEL", en proportions comprises entre 2% et 6% du poids total de poudre.

d) un liant gélifiant, par exemple de la méthylcellulose en proportions comprises entre 2% et 6% du poids total de poudre.

e) un liant fort, par exemple de l'alcool polyvinylique en proportions comprises entre 0 et 1% du poids total de poudre.

Une fois le mélange de poudres homogénéïsé par brassage, on ajoute de l'eau contenant avantageusement un lubrifiant par exemple de l'huile de paraffine ou toute autre huile minérale équivalente en proportions de l'ordre de 0,5% du volume d'eau.

La quantité d'eau se situe entre des limites bien déterminées. Elle est comprise entre 34% et 38% du poids total du mélange de poudres.

On malaxe le mélange de poudres et d'eau pour obtenir une pâte.

Dans le but d'améliorer les qualités rhéologiques de la pâte, on ajoute à la chamotte, un mélange de produits minéraux tels que du talc, de l'argile et des oxydes métalliques en proportions comprises entre 6% et 20% du poids de chamotte.

Une fois la pâte préparée, on met les pièces en forme par extrusion ou par moulage de la pâte.

On laisse sécher les pièces crues et ensuite on les cuit à une température comprise entre 1270°C et 1340°C.

Après cuisson, la composition minérale des céramiques obtenues est comprise dans les limites suivantes :

- Silice ($SiO_2$) entre 50% et 60% du poids total et, de préférence, de l'ordre de 55,25%;

- Alumine ($Al_2O_3$) entre 30% et 40% du poids total et, de préférence, de l'ordre de 31,55%;

- Magnésie (MgO) entre 5% et 10% du poids total et, de préférence, de l'ordre de 9,81%;

- Oxyde ferrique ($Fe_2O_3$) entre 1% et 2% du poids total et, de préférence, de l'ordre de 1,65%;

- Oxyde de titane ($TiO_2$) entre 0,5% et 2% du poids total et, de préférence, de l'ordre de 1,1%;

- Oxyde de sodium (NaO) entre 0,1% et 0,5% du poids total et, de préférence, de l'ordre de 0,32%;

- Oxyde de potassium ($K_2O$) entre 0,1% et 0,5% et, de préférence, de l'ordre de 0,32%.

Les céramiques cuites ayant la composition définie ci-dessus se situent dans la plage P1 représentée sur le diagramme de la figure 1.

Des céramiques de ce type ayant été préparées à partir d'un mélange contenant 18,5% de produits organiques pour 81,5% de produits minéraux et cuites pendant une durée de 2 heures présentent les caractéristiques suivantes :

- Pour une température du produit en fin de frittage égale à 1310°C, le volume poreux est de l'ordre de 50%, soit 414 $mm^3$/g. Le diamètre moyen des pores est de 3,2 micromètres.

- Pour une température du produit en fin de frittage égale à 1340°C, le volume poreux est de 25%, soit 220 $mm^3$/g et le diamètre moyen des pores est de 6 micromètres.

Ces résultats montrent qu'il est possible de faire varier la porosité et le diamètre moyen des pores dans une plage relativement étendue en faisant varier la température de frittage des pâtes selon l'invention.

La résistance mécanique à l'éclatement de céramiques frittée selon l'invention ayant une forme tubulaire simple, est supérieure à 10 bars.

## EXEMPLE NO. 2

On mélange soigneusement les produits suivants pris dans des proportions comprises entre les limites indiquées qui sont des proportions en poids rapportées au poids total :

- poudre de silico-aluminate crue 77% à 100%;
- agent de porosité (amidon) 0 à 10%;
- liant plastifiant ("Amigel") 0 à 4%;
- liant gélifiant (méthylcellulose) 0 à 4%;
- liant fort (alcool polyvinylique) 0 à 1%;
- plastifiant (polyéthylèneglycol) 0 à 3%.

La poudre de silico aluminate est par exemple un produit vendu dans le commerce sous la référence 57206 par la Société S.A.P.E.C. ou tout autre silico-aluminate cru donnant, après cuisson, une composition minérale comprise dans les limites indiquées ci-après.

On homogénéïse la poudre par brassage et on y ajoute une quantité d'eau comprise entre 31% et 35% du poids total du mélange de poudres et de liants. Avantageusement, on ajoute à l'eau de malaxage une petite quantité d'huile minérale de l'ordre de 0,5% du poids total. On malaxe, on met en forme les pièces, on les laisse sécher et on les cuit pour obtenir le frittage.

Les céramiques obtenues après cuisson ont une composition comprise entre les limites ci-après :

- Silice entre 30% et 40% du poids total;
- Alumine entre 60% et 70% du poids total;
- Magnésie entre 1% et 2% du poids total;
- Chaux vive entre 0,5% et 2% du poids total;
- Oxyde de Baryum entre 0,1% et 0,5% du poids total.

Des mesures ont été réalisées sur des céramiques frittées obtenues sans adjonction d'aucun agent de porosité (amidon) et contenant 4% de produits organiques après une durée de cuisson de 2 heures.

Une première série de mesures a été réalisée sur des céramiques frittées en atteignant en fin de frittage, une température de 1175°C. Dans ce cas, le volume poreux mesuré est égal à 25% et le diamètre moyen des pores est de l'ordre de 1 micromètre.

Une deuxième série de mesures a été réalisée sur des céramiques frittées en atteignant une température de 1275°C en fin de frittage. Dans ce cas, le volume poreux mesuré est égal à 33% et le diamètre moyen des pores est de 0,9 micromètre.

Les céramiques frittées correspondant à ce deuxième exemple se situent dans la plage P2 représentée sur la figure unique.

REVENDICATIONS

1. Pièces poreuses en céramique frittée destinées à être utilisées comme cartouches de filtration (microfiltration, ultrafiltration ou osmose inverse) ou comme support d'une membrane minérale microporeuse, caractérisées en ce qu'elles ont, après cuisson, une composition minérale comprise dans les limites suivantes :

- Silice ($SiO_2$) entre 30% et 60% du poids total;
- Alumine ($Al_2O_3$) entre 30% et 70% du poids total;
- Magnésie ($MgO$) entre 1% et 10% du poids total;
- Oxyde ferrique ($Fe_2O_3$) entre 0 et 2% du poids total;
- Oxyde de titane ($TiO_2$) entre 0 et 2% du poids total;
- Oxyde de sodium ($Na_2O$) entre 0 et 1% du poids total;
- Oxyde de potassium ($K_2O$) entre 0 et 1% du poids total;
- Oxyde de calcium ($CaO$) entre 0 et 2% du poids total;
- Oxyde de baryum ($BaO$) entre 0% et 2% du poids total,

de sorte qu'elles appartiennent à la famille des mullites et ont un point de fusion compris entre 1000°C et 1340°C.

2. Pièces en céramique frittée poreuse selon la revendication 1, caractérisées en ce qu'elles ont, après cuisson, une composition minérale comprise dans les limites suivantes :

- Silice entre 50% et 60% du poids total;
- Alumine entre 30% et 40% du poids total;
- Magnésie entre 5% et 10% du poids total;
- Oxyde ferrique entre 1% et 2% du poids total;
- Oxyde de titane entre 0,5% et 2% du poids total;
- Oxyde de sodium entre 0,1% et 0,5% du poids total;
- Oxyde de potassium entre 0,1% et 0,5% du poids total.

3. Pièces selon la revendication 2, caractérisées en ce qu'elles ont, après cuisson, la composition minérale suivante :

- Silice : 55,25% du poids total;
- Alumine : 31,55% du poids total;
- Magnésie : 9,81% du poids total;
- Oxyde ferrique : 1,65% du poids total;
- Oxyde de titane : 1,10% du poids total;
- Oxyde de sodium : 0,32% du poids total;
- Oxyde de potassium : 0,32% du poids total.

4. Pièces en céramique poreuse selon la revendication 1, caractérisées en ce qu'elles ont, après cuisson, une composition minérale comprise dans les limites suivantes :

- Silice entre 30% et 40% du poids total;

- Alumine entre 60% et 70% du poids total;

- Magnésie entre 1% et 2% du poids total;

- Oxyde de calcium entre 0,5% et 2% du poids total;

- Oxyde de baryum entre 0,1% et 0,5% du poids total.

5. Pièces selon la revendication 4, caractérisées en ce qu'elles ont, après cuisson, la composition suivante :

- Silice : 31,5%.

- Alumine : 65%;

- Magnésie : 1,6%;

- Chaux : 1,5%;

- Oxyde de baryum : 0,4%.

6. Procédé de fabrication de pièces poreuses en céramique frittée selon l'une quelconque des revendications 2 et 3, caractérisées par la suite d'opérations suivantes :

- on mélange les produits ci-après : de la chamotte broyée ayant une granulométrie comprise entre 0 et 120 micromètres en proportion en poids comprise entre 74,5% et 96% du poids total;

- un agent de porosité par exemple de l'amidon en proportion en poids comprise entre 0 et 12% du poids total;

- un liant plastifiant dérivé de l'amidon en proportion en poids comprise entre 2% et 6%;

- un liant-gélifiant, de préférence de la méthylcellulose en proportion en poids comprise entre 2% et 6%;

- un liant fort, de préférence de l'alcool polyvinylique, en proportion en poids comprise entre 0 et 1%;

- on malaxe le mélange avec une quantité d'eau comprise entre 34 et 38% du poids total dudit mélange;

- on met les pièces en forme, on les sèche puis on les cuit pendant une durée de l'ordre de 2 heures à une température comprise entre 1270°C et 1340°C en fin de frittage.

7. Procédé de fabrication selon la revendication 6 de pièces selon la revendication 3, caractérisé en ce que l'on cuit lesdites pièces à une température de 1310°C en fin de frittage et on obtient des pièces en céramique poreuse ayant un diamètre moyen de pores égal à 3,2 micromètres et un volume poreux de l'ordre de 50%.

8. Procédé de fabrication selon la revendication 6 de pièces selon la revendication 3, caractérisé en ce que l'on cuit les pièces moulées à une température de 1340°C en fin de frittage et on obtient des pièces en céramique poreuse ayant un diamètre moyen de pores égal à 6 micromètres et un volume poreux de l'ordre de 25%.

9. Procédé de fabrication de pièces poreuses en céramique frittée selon l'une quelconque des revendications 4 et 5, caractérisé par la suite d'opérations suivantes :

- on mélange les produits ci-après pris dans des proportions comprises entre les limites indiquées, ces proportions étant rapportées au poids total du mélange:

- un silico-aluminate cru en proportion comprise entre 77,5% et 100%;

- un agent de porosité, de préférence de l'amidon en proportions comprises entre 0 et 10%;

- un liant plastifiant, de préférence, un dérivé de l'amidon en proportions comprises entre 0 et 4%;

- un liant gélifiant, de préférence de la méthylcellulose en proportions comprises entre 0 et 4%;

- un liant fort, de préférence de l'alcool polyvinylique en proportions comprises entre 0 et 1%;

- un plastifiant, de préférence du polyéthylène glycol en proportions comprises entre 0 et 3%;

- on malaxe le mélange avec une quantité d'eau comprise entre 31% et 35% du poids total dudit mélange;

- on met les pièces en forme, on les sèche, et on les cuit pendant une durée de l'ordre de 2 heures à une température comprise entre 1150°C et 1280°C en fin de frittage.

10. Procédé selon la revendication 9 pour fabriquer des pièces selon la revendication 5, caractérisé en ce que l'on cuit lesdites pièces à une température de 1175°C en fin de frittage et on obtient des pièces ayant un volume poreux de 25% et un diamètre moyen de pores de 1 micromètre.

11. Procédé selon la revendication 8, pour fabriquer des pièces solon la revendication 5, caractérisé en ce que l'on cuit lesdites pièces à une température de 1275°C en fin de frittage et on obtient des pièces ayant un volume poreux de 33% et un diamètre moyen de pores de 0,9 Micromètre.

# RAPPORT DE RECHERCHE EUROPEENNE

**Office européen des brevets**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.⁴) |
|---|---|---|---|
| A | US-A-4 069 157 (F.W. HOOVER et al.) <br> * Colonne 1, lignes 56-57; colonne 2, lignes 46-62; colonne 3, lignes 9-17 * | 1,6,7, 9,11 | B 01 D 39/20 <br> C 04 B 35/18 <br> C 04 B 38/06 |
| | --- | | |
| A | US-A-4 278 544 (M. TAKASHIMA) <br><br> * Résumé; colonne 3, lignes 30-35,43-50 * | 1,8,10 ,11 | |
| | --- | | |
| A | DE-A- 719 181 (O. KRAUSE) <br> * Revendications 1,2 * | 1 | |
| | --- | | |
| A | FR-A-2 431 468 (LAFARGE) <br> * Revendication 1; page 7, lignes 27-32 * | 6,7 | |
| | --- | | **DOMAINES TECHNIQUES RECHERCHES (Int. Cl.⁴)** |
| A | DE-A-2 210 438 (SIEMENS) <br><br> * Page 5, lignes 9-17 * | | C 04 B 38/00 <br> C 04 B 35/00 <br> B 01 D 39/00 <br> B 01 D 13/00 |
| | --- | | |
| A | CHEMICAL ABSTRACTS, vol. 103, no. 16, 21 octobre 1985, page 230, résumé no. 127107r, Columbus, Ohio, US; J.P. DAY et al.: "The development and application of cellular ceramic filters for gray and ductile iron", & TRANS. AM. FOUNDRYMEN'S SOC. 1984, 92, 339-45 | | |
| | ---      -/- | | |

Le présent rapport de recherche a été établi pour toutes les revendications

| Lieu de la recherche | Date d'achèvement de la recherche | Examinateur |
|---|---|---|
| LA HAYE | 12-05-1987 | DAELEMAN P.C.A. |

| Catégorie | Citation du document avec indication, en cas de besoin, des parties pertinentes | Revendication concernée | CLASSEMENT DE LA DEMANDE (Int. Cl.4) |
|---|---|---|---|
| **DOCUMENTS CONSIDERES COMME PERTINENTS** | | | **Page 2** |
| A | US-A-3 463 649 (R.F. MOORE) | | |
| | ----- | | |

**DOMAINES TECHNIQUES RECHERCHES (Int. Cl.4)**

Le présent rapport de recherche a été établi pour toutes les revendications

| Lieu de la recherche | Date d'achèvement de la recherche | Examinateur |
|---|---|---|
| LA HAYE | 12-05-1987 | DAELEMAN P.C.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82